# EUROPÄISCHE PATENTANMELDUNG

(11) **EP 4 667 905 A1**
(43) Veröffentlichungstag der Anmeldung: **24.12.2025**
(21) Anmeldenummer: 24182627.0
(22) Anmeldetag: 17.06.2024
(51) Int. Cl.: G01N 21/17, G01N 33/00

(54) **VEHICLE-MOUNTED PHOTOACOUSTIC SENSOR FOR MEASURING METHANE**

(71) Anmelder: Schütz GmbH Messtechnik, 77933 Lahr (DE)
(72) Erfinder: Heimburger, Volker, 77933 Lahr (DE)
(74) Vertreter: mepat Patentanwälte

(57) **Zusammenfassung**

Die vorliegende Erfindung stellt eine fahrbare Gasmessvorrichtung (1) bereit, die ausgebildet ist zur Messung von Methan in befahrbarem Gelände. Sie umfasst ein Gasmessfahrzeug (20) mit einer Photoakustik basierten Gasmesseinrichtung (2), wobei die Photoakustik basierte Gasmesseinrichtung (2) eine photoakustische Messzelle (10) aufweist, die in einer Schwingungsdämpfungsvorrichtung gelagert ist. Die Gasmesseinrichtung (2) weist zumindest eine Pumpe (11) auf die mit einer Ansaugleitung (3) und einer Auslassleitung (5) verbunden ist. Die photoakustische Messzelle (10) weist einen Schallaufnehmer (13) auf, der dazu ausgebildet ist, ausschließlich eine von dem in die photoakustische Messzelle (10) einströmenden und darin mittels einer Lichtemissionseinheit (9) angeregten Methan emittierte akustische Frequenz zu erfassen. Der Schallaufnehmer (13) ist mit einer Datenverarbeitungsvorrichtung operativ gekoppelt, um die erfasste Frequenz zu verarbeiten.

## Beschreibung

Die Erfindung betrifft eine fahrbare Gasmessvorrichtung, die zur Messung von Methan in befahrbarem Gelände ausgebildet ist.

Die Notwendigkeit der Erfassung von Gasvorkommen - insbesondere im Sinne von unerwünschten Gasaustritten aus gasführenden Leitungen, die unterirdisch verlegt sind und auch durch Freiland bzw. freies Gelände verlaufen - ist bekannt. Der Stand der Technik kennt entsprechende Messverfahren, auch für Alkane.

Zur Überprüfung von Gasleitungen, die unter Wegen und Straßen und folglich unter gut befahrbarem Terrain verlegt sind, beschreibt die DE 39 24 337 eine Vorrichtung das damit durchführbare Verfahren. Dort wird eine an einem Straßenfahrzeug angeordnete Sonde mit einem Messsystem zum Detektieren des entsprechenden Gases entlang des Gasleitungsnetzes, das unter den Straßen liegt, verfahren. Die Messung erfolgt dort nach der DVGW Vorschrift Nr. G 465 I (Deutsches Regelwerk Gas und Wasser). Mit der Sonde wird dort eine Gasprobe dicht oberhalb der Erdoberfläche abgesaugt und dem Messsystem zugeführt, wobei Referenzsonden zur Kompensation von störgasbasierten Anteilen, also Gasen, die etwa auf Grund von Umweltverschmutzung in die Atmosphäre gelangen, eingesetzt wurden.

Aus EP 4 024 022 A1 ist ein Gasmessfahrzeug bekannt, das mit einer daran angeordneten Gasmessvorrichtung in unwegsamerem Gelände eingesetzt werden kann, wobei die Gasaufnahme unterhalb des Fahrzeugbodens erfolgt.

Bekannte Gasmessvorrichtungen, die auch zur Messung für Methan im Freien geeignet sind, basieren auf der Cavity-Ring-Down-Spektroskopie, die zuverlässig und kostenaufwändig ist.

Ausgehend von diesem Stand der Technik ist es Aufgabe der vorliegenden Erfindung, eine kostengünstige und technisch vereinfachte Gasmessvorrichtung zur Messung von Methan in befahrbarem Gelände bereitzustellen.

Diese Aufgabe wird durch eine fahrbare Gasmessvorrichtung mit den Merkmalen des Anspruchs 1 gelöst.

Weiterbildungen der fahrbaren Gasmessvorrichtung sind in den Unteransprüchen ausgeführt.

Nach einer ersten Ausführungsform einer erfindungsgemäßen fahrbaren Gasmessvorrichtung, die zur Messung von Methan in befahrbarem Gelände ausgebildet ist, weist diese ein Gasmessfahrzeug mit einer Photoakustik basierten Gasmesseinrichtung auf. Die Photoakustik basierte Gasmesseinrichtung verfügt über eine photoakustische Messzelle, die mit zumindest einer Pumpe, einer Ansaugleitung und einer Auslassleitung verbunden ist, und ist erfindungsgemäß vorteilhaft in einer Schwingungsdämpfungsvorrichtung gelagert. Dabei hat die photoakustische Messzelle einen Schallaufnehmer, der dazu ausgebildet ist, ausschließlich eine von dem in die photoakustische Messzelle einströmenden und darin mittels einer Lichtemissionseinheit angeregten Methan emittierten akustischen Frequenz zu erfassen, und wobei der Schallaufnehmer mit einer Datenverarbeitungsvorrichtung operativ gekoppelt ist, um die erfasste Frequenz zu verarbeiten.

Der Nachweis von Methan, qualitativ wie auch quantitativ, mittels Photoakustik ist an sich bekannt und beruht darauf, dass bei Bestrahlung von Methan in einer Messzelle mittels gepulster Lichtquelle die Moleküle Licht absorbieren und die eine Erwärmung des Methans erfolgt, was wiederum in einem finiten Volumen der Zelle zu Ausdehnung und damit zu akustischen Wellen führt. Die Frequenz dieser Schallwellen stimmt mit der Modulationsfrequenz des Lichtemitters überein und die Schallwellen (Schallsignale) können mit Schallwandlern als Detektoren, hierin "Mikrofon", detektiert werden. Die Amplitude des Schallsignals korreliert wiederum mit der Absorptionsstärke, so dass auf diese Weise die Methankonzentration in der photoakustischen Messzelle bestimmt werden kann.

Das Gasmessfahrzeug ist dazu ausgebildet und geeignet, im Gelände und mithin im Freiland eingesetzt zu werden, sofern ein geeignetes Fahrzeug wie etwa ein Quad darauf fahren kann. "Messung von Methan" meint hierin das Erfassen des Gases Methan aus allen denkbaren Methanemissionsquellen natürlicher und nicht-natürlicher Art, dabei ist das Überfahren etwa von im Boden verlegten Leitungen oder Behältern ebenso umfasst, wie das Erfassen von Methan beim Vorbeifahren etwa an Behältern.

"Schwingungsdämpfungsvorrichtung" meint hierin jegliche Art von Lagerung, bei der eine Übertragung von Schwingungen von dem Gasmessfahrzeug auf die Komponenten der Photoakustik basierten Gasmesseinrichtung minimiert bis ganz verhindert wird, d. h., dass eine maximal mögliche Schwingungsdämpfung erreicht wird.

Mit der erfindungsgemäßen fahrbaren Gasmessvorrichtung, die das Gasmessfahrzeug und die Photoakustik basierte Gasmesseinrichtung mit Schwingungsdämpfungsvorrichtung umfasst, kann eine gezielte Rauschunterdrückung erfolgen, so dass die Gasmessvorrichtung eine vorteilhaft verbesserte Empfindlichkeit gegenüber dem zu erfassenden Methan hat. Durch die Verwendung einer photoakustischen Messzelle wie hierin mit der erfindungsgemäßen fahrbaren Vorrichtung im Gelände, wird eine im Vergleich zu bisher genutzten Gasmesstechniken günstige, aber zugleich hochpräzise Messtechnik zur Methanmessung ermöglicht. Das Gasmessfahrzeug erlaubt eine leitungs- und kabelungebundene und zielgerichtete Ansteuerung von Methanemissionen.

Eine fahrzeuggestützte oberirdische Rohrnetzkontrolle wird mit der erfindungsgemäßen fahrbaren Gasmessvorrichtung also auf einfache Weise kostengünstig und reproduzierbar ermöglicht.

Gemäß einer weiteren Ausführungsform der erfindungsgemäßen Gasmessvorrichtung hat die Ansaugleitung eine Einlassöffnung, die an einem Frontabschnitt des Gasmessfahrzeugs angeordnet ist. Damit ist die Einlassöffnung in eine bevorzugte Fahrtrichtung des Fahrzeugs gerichtet, so dass bei der Detektion von Methan das Fahrzeug seinen Messpfad in die Richtung, aus der das Methan emittiert wird, fortführen kann.

Nach einer alternativen Ausführungsform der erfindungsgemäßen Gasmessvorrichtung kann die Einlassöffnung der Ansaugleitung auch an anderen Stellen des Fahrzeugs nach außen gerichtet angeordnet sein, etwa am Unterboden oder an einem hinteren Abschnitt des Fahrzeugs.

Gemäß einer noch weiteren Ausführungsform der erfindungsgemäßen Gasmessvorrichtung umfasst die Schwingungsdämpfungsvorrichtung ein Gehäuse, das mit einem Schwingungsdämpfungsmaterial ausgekleidet ist. Dieses Gehäuse haust die empfindlichen elektronischen Komponenten, insbesondere die photoakustische Messzelle, die Lichtemissionseinheit sowie die Datenverarbeitungseinheit, und reduziert die Schwingungen, die von dem Gasmessfahrzeug oder aus externen Quellen die Messung stören könnten.

Nach einer noch weiteren Ausführungsform der erfindungsgemäßen Gasmessvorrichtung bildet das Schwingungsdämpfungsmaterial eine Ein- oder Mehrschichtanordnung: Das Material der einen oder auch mehreren Schichten kann vorteilhaft bspw. aus PUR-Schaumstoff, Kaltschaum, Verbundschaum, Gelschaum und/oder Kombinationen daraus bestehen, wobei bei der Anordnung mehrerer Schichten übereinander diese jeweils aus unterschiedlichen Materialien bestehen können. Als Schwingungsdämpfungsmaterial können sich alle Arten von Schaum- oder Dämpfungsstoffen eignen, die in der Schwingungsdämpfung oder Akustikdämpfung eingesetzt wird. Es kann sich um ein einziges oder auch mehrere Schaumstoffstücke handeln, die für die zu schützenden Komponenten angepasste Ausnehmungen aufweisen.

Weiter kann nach einer noch weiteren Ausführungsform der erfindungsgemäßen Gasmessvorrichtung die Schwingungsdämpfungsvorrichtung ein Hüllmaterial aufweisen, das eine schwingungsdämpfende Umhüllung für die Ansaugleitung und die Auslassleitung bereitstellt. Je besser die Ansaugleitung und die Auslassleitung vor Schwingungen, die von dem Gasmessfahrzeug oder aus externen Quellen stammen, geschützt sind, desto geringer ist der Eintrag in die photoakustische Messzelle. Die Messung wird hierdurch vor Störfaktoren geschützt und die Qualität der Messergebnisse wird optimiert.

Schließlich kann nach einer weiteren Ausführungsform der erfindungsgemäßen Gasmessvorrichtung das Hüllmaterial eine schwingungsdämpfende Umhüllung für die Ansaugleitung und die Auslassleitung als Ein- oder Mehrschichtumhüllung bilden; vorgeschlagen werden dazu Gummi- oder Kunststoffschlauchmaterialien.

Bevorzugt wird zur Abkopplung der Schwingungen des Fahrzeugs oder durch Wind ein Schlauch-in-Schlauch-System mit einem äußeren Schutzschlauch verwendet, der die von außen auftretenden Schwingungen aufnimmt, so dass der innere Schlauch auch gleichzeitig eine Schalldämmung, insbesondere gegen Longitudinalwellen, die durch Fahrzeugmotoren ausgelöst werden können, bildet. Ferner können die Ansaugleitungen für das Methan Ansaugschläuche sein, die auf die übliche Weise mit Schlauchschellen oder ähnlichem auf dem entsprechenden Anschlussstutzen gesichert sein können.

Die photoakustische Messzelle, die hierin dazu ausgelegt ist, ausschließlich eine den Methanmolekülen zugeordnete Schallfrequenz dem Schallaufnehmer bzw. Mikrofon zu erfassen, kann eine resonante oder eine nicht-resonante photoakustische Messzelle sein, wobei die Geometrie des Messvolumens der photoakustischen Messzelle die Empfindlichkeit des Mikrofons beeinflusst. Wird es resonant betrieben, so stimmt die Modulationsfrequenz der Lichtemissionseinheit mit der akustischen Resonanzfrequenz überein und das detektierte Signal wird verstärkt.

Wird der photoakustische Detektor (Mikrofon) hingegen nicht-resonant betrieben, so liegt die Modulationsfrequenz der Lichtquelle deutlich unterhalb der akustischen Resonanzfrequenz der Messzelle und die entstandenen Schallwellen werden nicht weiter verstärkt.

Hierin wird bevorzugt vorgeschlagen, die Messung resonant zu betreiben.

Als Lichtemissionseinheit ist eine Infrarotquelle vorgeschlagen, die Infrarot-Strahlung in einem breitbandigen Bereich abstrahlt (im Bereich um 3,3 µm) die die dem Methan zugeordnete Frequenz umfasst. Die Lichtquelle kann eine LED oder ein Laser sein. Die Verwendung von LEDs als Lichtquelle ermöglicht eine Empfindlichkeit der photoakustischen Messzelle im ppm-Bereich (10-6); ein Laser ermöglicht Messwerte im niedrigen ppb-Bereich (10-9); hierin wird der ppb-Bereich bevorzugt.

Ferner weist in einer weiteren Ausführungsform der erfindungsgemäßen fahrbaren Gasmessvorrichtung das Gasmessfahrzeug einen Windmesser auf, vorgeschlagen wird beispielsweise ein 3D-Ultraschall-Anemometer, durch den bzw. durch das die Windrichtung bestimmt werden kann, und damit auch, aus welcher Richtung das emittierte Methan kommt. So kann seine Emissionsquelle vorteilhaft einfach bestimmt werden: Die gemessene Methankonzentration in der Luft kann mit den Winddaten bzw. der Windrichtung und der Stärke visualisiert bzw. abgeglichen werden und so kann eine Fläche des Geländes bestimmt werden, der man einen Verdacht auf eine Methanemission zuweist. Damit erlaubt die Erfindung hier die Nutzung der photoakustischen Spektroskopie in der fahrzeuggestützten oberirdischen Kontrolle Methan führender Leitungen mit Windmessung.

Gemäß einer weiteren Ausführungsform der erfindungsgemäßen Gasmessvorrichtung wird diese eine Datenverarbeitungseinheit umfassen, die mit einer Speichervorrichtung gekoppelt ist. Diese Datenverarbeitungseinheit liegt vorteilhaft ebenfalls geschützt in oder an dem Gasmessfahrzeug vor, bevorzugt ist sie in dem Gehäuse angeordnet, dass auch die photoakustische Messzelle, die Lichtemissionseinheit und die Ansaugpumpe, mit der das zu detektierende Gas über die Ansaugleitung in die Messzelle gefördert wird, bzw. mit der das Gas über die Auslassleitung aus der Messzelle hinaus gefördert wird.

Gemäß einer noch weiteren Ausführungsform der erfindungsgemäßen Gasmessvorrichtung kann ein Display zur Messwertanzeige oder kann eine Kommunikationseinheit zur Kommunikation mit der Datenverarbeitungs- und/oder Speichervorrichtung und einer mobilen Anzeigeeinheit wie einem Tablet oder einem Laptop im Sicht- und Betätigungsbereichs eines Fahrers des Fahrzeuges angeordnet sein.

Das Gehäuse kann an dem Fahrzeug fest oder lösbar angeordnet sein.

Weil das emittierte Methan durch Emission aus Gasleitungen nicht nur in gut zugänglichen Rohrleitungsnetzen sondern auch in unwegsamem Gelände zu messen ist, wird vorgeschlagen, dass das Gasmessfahrzeug ein motorisiertes Geländefahrzeug mit Allradantrieb ist, ein Quad stellt etwa eine ausreichende Größe bereit. Nicht ausgeschlossen sind geeignete andere Fahrzeuge mit Rädern oder Ketten, auch autonom bewegte. Grundsätzlich kommen auch Drohnen oder Roboter an sich, wie etwa mehrbeinige Laufplattformen, in Frage, die hierin somit auch als "Fahrzeuge" verstanden werden.

Entsprechend kann eine Datenübertragung mittels bekannten kabellosen Datenübertragungstechniken, etwa Funk, dann von einem unbemannten Gasmessfahrzeug an eine beabstandete Vorrichtung zur Analyse und Verwaltung der erhaltenen Messwerte erfolgen.

Weitere Ausführungsformen der erfindungsgemäßen Gasmessvorrichtung sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Die Figuren sind lediglich eine schematische Darstellung einer Ausführungsform der Erfindung.

Dabei zeigen:
- **Fig. 1**: eine Seitenansicht einer erfindungsgemäßen fahrbaren Gasmessvorrichtung,
- **Fig. 2**: eine schematische Ansicht einer Photoakustik basierten Gasmesseinrichtung der erfindungsgemäßen fahrbaren Gasmessvorrichtung.

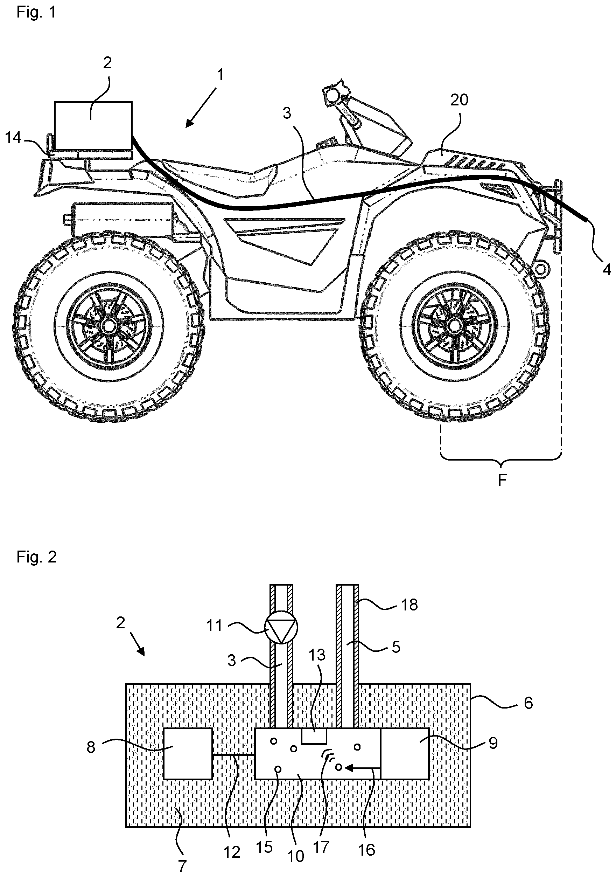

Die erfindungsgemäße fahrbare Gasmessvorrichtung 1 zeigt hierin in Fig. 1 das Quad 20 als Gasmessfahrzeug 20, das dazu ausgebildet ist, Methan im Gelände über dem Boden zu erfassen. Auf dem Gepäckträger 14 des Quads 20 ist eine Photoakustik basierte Gasmesseinrichtung 2 als kombinierte Detektions- und Auswertevorrichtung angeordnet. Die Photoakustik basierte Gasmesseinrichtung 2 weist als Ansaugleitung 3 einen Schlauch 3 auf, die sich bis zu einem Frontabschnitt F des Quads 20 erstreckt. Die Einlassöffnung 4 der Ansaugleitung 3 liegt hier vor dem Frontabschnitt F, hier in Richtung der Hauptfahrrichtung des Gasmessfahrzeugs 20 (in Fig. 1 nach rechts). Der Fluidpfad für das angesaugte Methan verläuft von der Einlassöffnung 4 durch den Schlauch 3 bis in die photoakustische Messzelle 10.

Die Gasmesseinrichtung 2 in Fig. 2 zeigt schematisch das Gehäuse 6 mit einer darin angeordneten photoakustischen Messzelle 10, die mit einer Lichtemissionseinheit 9 und einer Datenverarbeitungs- und Speichereinheit 8 verbunden ist. Die Messzelle 10 weist ein Mikrofon 13 auf, das die Schallwellen 17 erfasst, die in der Messzelle 10 durch die Lichtemissionseinheit 9, die die Methanmoleküle 15 anregt, entstehen.

Die elektronischen Komponenten sind über Datenleitungen 12 alle miteinander und mit der Datenverarbeitungs- und Speichereinheit 8 elektronisch verbunden und operativ untereinander gekoppelt. Die in dem Gehäuse 6 enthaltenen Komponenten und die Ansaug- und die Auslassleitung 3, 5 sind schwingungsgedämpft gelagert, so dass die Methanmessung nicht von Schwingungen des Gasmessfahrzeuges 20 oder anderer externer Schwingungen beeinflusst wird. Die in dem Gehäuse 6 enthaltenen Komponenten sind in dem stricheliert gezeigten weichen Schaumstoff als Schwingungsdämpfungsmaterial 7 gelagert und die Ansaug- und Auslassleitung 3, 5 werden durch den schraffiert gezeigten Schutzschlauch 18 geschützt.

Das Methan, das bei der Durchführung der Messung des Gases, das über die Ansaugleitung 3 mittels Pumpe 11 angesaugt und in die photoakustische Messzelle 10 überführt wird, wird durch Infrarotlicht (Lichtstrahl 16) bestrahlt, so dass die Gasmoleküle 15 angeregt werden und durch Erwärmung und folglich Beanspruchung von Mehrvolumen Schallwellen 17 erzeugen, die vom Mikrofon 13 aufgenommen werden. In der Datenverarbeitungseinheit 8 wird dann das Schallsignal mit der Schallfrequenz des Methans ausgewertet und über die bestimmte Amplitude auch die Quantität des Methans bestimmt.

Über die Auslassleitung 5 wird bei kontinuierlichem Betrieb der Pumpe 11 das durch die Ansaugleitung 3 in die Messzelle 10 eingeführte Gas wieder abgeleitet.

Die Gasmesseinrichtung, die bspw. einen IR-Laser zur Analyse des Zielgases Methan im Gasstrom umfassen kann, ist mit einer hierin nicht gezeigten Energiequelle verbunden.

Die Auswertung der Messergebnisse kann vor Ort vorgenommen werden und auch über entsprechende Displays angezeigt werden; die ermittelten Daten können aber auch an einen Bestimmungsort übertragen und dort weiter verwertet und bearbeitet werden.

### BEZUGSZEICHENLISTE

- 1: Fahrbare Gasmessvorrichtung
- 2: Photoakustik basierte Gasmesseinrichtung
- 3: Ansaugleitung
- 4: Einlassöffnung Ansaugleitung
- 5: Auslassleitung
- 6: Gehäuse
- 7: Schwingungsdämpfungsmaterial
- 8: Datenverarbeitungseinheit
- 9: Lichtemissionseinheit
- 10: Messzelle
- 11: Pumpe
- 12: Datenleitung
- 13: Schallaufnehmer
- 14: Gepäckträger
- 15: Gasmoleküle
- 16: Lichtstrahl
- 17: Schallwelle
- 18: Schutzschlauch
- 20: Gasmessfahrzeug/Quad

- F: Frontabschnitt

## Patentansprüche

1. Fahrbare Gasmessvorrichtung (1), ausgebildet zur Messung von Methan in befahrbarem Gelände,
**dadurch gekennzeichnet, dass**
die fahrbare Gasmessvorrichtung (1) ein Gasmessfahrzeug (20) mit einer Photoakustik basierten Gasmesseinrichtung (2) aufweist,
wobei die Photoakustik basierte Gasmesseinrichtung (2) eine photoakustische Messzelle (10) aufweist, die in einer Schwingungsdämpfungsvorrichtung gelagert ist, und die mit zumindest einer Pumpe (11), einer Ansaugleitung (3) und einer Auslassleitung (5) verbunden ist,
und wobei die photoakustische Messzelle (10) einen Schallaufnehmer (13) aufweist, der dazu ausgebildet ist, ausschließlich eine von dem in die photoakustische Messzelle (10) einströmenden und darin mittels einer Lichtemissionseinheit (9) angeregten Methan emittierte akustische Frequenz zu erfassen,
und wobei der Schallaufnehmer (13) mit einer Datenverarbeitungsvorrichtung operativ gekoppelt ist, um die erfasste Frequenz zu verarbeiten.

2. Fahrbare Gasmessvorrichtung (1) nach Anspruch 1,
**dadurch gekennzeichnet, dass**
die Ansaugleitung (3) eine Einlassöffnung (4) aufweist, die an einem Frontabschnitt (F) des Gasmessfahrzeugs (1) angeordnet ist.

3. Fahrbare Gasmessvorrichtung (1) nach Anspruch 1 oder 2,
**dadurch gekennzeichnet, dass**
die Schwingungsdämpfungsvorrichtung ein Gehäuse (6) umfasst, das mit einem Schwingungsdämpfungsmaterial (7) ausgekleidet ist.

4. Fahrbare Gasmessvorrichtung (1) nach zumindest einem der Ansprüche 1 bis 3, **dadurch gekennzeichnet, dass**
die Schwingungsdämpfungsvorrichtung ein Hüllmaterial aufweist, das eine schwingungsdämpfende Umhüllung für die Ansaugleitung (3) und die Auslassleitung (5) bereitstellt.

5. Fahrbare Gasmessvorrichtung (1) nach Anspruch 4,
**dadurch gekennzeichnet, dass**
das Schwingungsdämpfungsmaterial eine Ein- oder Mehrschichtanordnung bildet, wobei das Material der Ein- oder Mehrschichtanordnung ausgewählt ist aus der Gruppe umfassend PUR-Schaumstoff, Kaltschaum, Verbundschaum, Gelschaum und Kombinationen daraus.

6. Fahrbare Gasmessvorrichtung (1) nach Anspruch 4 oder 5,
**dadurch gekennzeichnet, dass**
das Hüllmaterial, das eine schwingungsdämpfende Umhüllung für die Ansaugleitung (3) und die Auslassleitung (5) bereitstellt, eine Ein- oder Mehrschichtumhüllung ist, wobei das Material der Ein- oder Mehrschichtumhüllung ein Gummi- oder Kunststoffschlauchmaterial umfasst.

7. Fahrbare Gasmessvorrichtung (1) nach zumindest einem der Ansprüche 1 bis 6, **dadurch gekennzeichnet, dass**
die photoakustische Messzelle (10) eine resonante oder eine nicht-resonante photoakustische Messzelle ist.

8. Fahrbare Gasmessvorrichtung (1) nach zumindest einem der Ansprüche 1 bis 7, **dadurch gekennzeichnet, dass**
das Gasmessfahrzeug (20) einen Windmesser aufweist.

9. Fahrbare Gasmessvorrichtung (1) nach zumindest einem der Ansprüche 1 bis 8, **dadurch gekennzeichnet, dass**
das Gasmessfahrzeug (20) ein motorisiertes Geländefahrzeug (1) mit einem Allradantrieb ist.

## Geänderte Patentansprüche

### Geänderte Patentansprüche gemäss Regel 137(2) EPÜ.

1. Fahrbare Gasmessvorrichtung (1), ausgebildet zur Messung von Methan in befahrbarem Gelände,
**dadurch gekennzeichnet, dass**
die fahrbare Gasmessvorrichtung (1) ein Gasmessfahrzeug (20) mit einer Photoakustik basierten Gasmesseinrichtung (2) aufweist,
wobei die Photoakustik basierte Gasmesseinrichtung (2) eine photoakustische Messzelle (10) aufweist, die in einer Schwingungsdämpfungsvorrichtung gelagert ist, und die mit zumindest einer Pumpe (11), einer Ansaugleitung (3) und einer Auslassleitung (5) verbunden ist,
und wobei die photoakustische Messzelle (10) einen Schallaufnehmer (13) aufweist, der dazu ausgebildet ist, ausschließlich eine von dem in die photoakustische Messzelle (10) einströmenden und darin mittels einer Lichtemissionseinheit (9) angeregten Methan emittierte akustische Frequenz zu erfassen,
und wobei der Schallaufnehmer (13) mit einer Datenverarbeitungsvorrichtung operativ gekoppelt ist, um die erfasste Frequenz zu verarbeiten,
und wobei die Schwingungsdämpfungsvorrichtung ein Gehäuse (6) umfasst, das mit einem Schwingungsdämpfungsmaterial (7) ausgekleidet ist und ein Hüllmaterial aufweist, das eine schwingungsdämpfende Umhüllung für die Ansaugleitung (3) und die Auslassleistung (5) bereitstellt.

2. Fahrbare Gasmessvorrichtung (1) nach Anspruch 1,
**dadurch gekennzeichnet, dass**
die Ansaugleitung (3) eine Einlassöffnung (4) aufweist, die an einem Frontabschnitt (F) des Gasmessfahrzeugs (1) angeordnet ist.

3. Fahrbare Gasmessvorrichtung (1) nach Anspruch 1 oder 2,
**dadurch gekennzeichnet, dass**
das Schwingungsdämpfungsmaterial eine Ein- oder Mehrschichtanordnung bildet, wobei das Material der Ein- oder Mehrschichtanordnung ausgewählt ist aus der Gruppe umfassend PUR-Schaumstoff, Kaltschaum, Verbundschaum, Gelschaum und Kombinationen daraus.

4. Fahrbare Gasmessvorrichtung (1) nach zumindest einem der Ansprüche 1 bis 3, **dadurch gekennzeichnet, dass**
das Hüllmaterial, das eine schwingungsdämpfende Umhüllung für die Ansaugleitung (3) und die Auslassleitung (5) bereitstellt, eine Ein- oder Mehrschichtumhüllung ist, wobei das Material der Ein- oder Mehrschichtumhüllung ein Gummi- oder Kunststoffschlauchmaterial umfasst.

5. Fahrbare Gasmessvorrichtung (1) nach zumindest einem der Ansprüche 1 bis 4, **dadurch gekennzeichnet, dass**
die photoakustische Messzelle (10) eine resonante oder eine nicht-resonante photoakustische Messzelle ist.

6. Fahrbare Gasmessvorrichtung (1) nach zumindest einem der Ansprüche 1 bis 5, **dadurch gekennzeichnet, dass**
das Gasmessfahrzeug (20) einen Windmesser aufweist.

7. Fahrbare Gasmessvorrichtung (1) nach zumindest einem der Ansprüche 1 bis 6, **dadurch gekennzeichnet, dass**
das Gasmessfahrzeug (20) ein motorisiertes Geländefahrzeug (1) mit einem Allradantrieb ist.
